(19) Europäisches Patentamt
European Patent Office
Office européen des brevets

(11) **EP 3 940 244 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **21178045.7**

(22) Anmeldetag: **07.06.2021**

(51) Internationale Patentklassifikation (IPC):
**F04D 25/16** *(2006.01)* **F04D 27/00** *(2006.01)*

(52) Gemeinsame Patentklassifikation (CPC):
**F04D 25/166; F04D 27/004;** F05D 2270/20;
F05D 2270/335; Y02B 30/70

(54) **SYSTEM UND EIN VERFAHREN ZUR OPTIMIERTEN REGELUNG EINER ANORDNUNG VON MEHREREN VENTILATOREN**

SYSTEM AND METHOD FOR OPTIMIZED CONTROL OF A PLURALITY OF FANS

SYSTÈME ET PROCÉDÉ DE RÉGULATION OPTIMISÉE D'UN ENSEMBLE DE VENTILATEURS MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2020 DE 102020118725**

(43) Veröffentlichungstag der Anmeldung:
**19.01.2022 Patentblatt 2022/03**

(73) Patentinhaber: **ebm-papst Mulfingen GmbH & Co. KG**
**74673 Mulfingen (DE)**

(72) Erfinder:
• **Conrad, Daniel**
**74243 Langenbrettach (DE)**
• **Reichert, Erik**
**97944 Boxberg (DE)**

(74) Vertreter: **Staeger & Sperling**
**Partnerschaftsgesellschaft mbB**
**Sonnenstraße 19**
**80331 München (DE)**

(56) Entgegenhaltungen:
**EP-A1- 3 795 465 US-A1- 2011 014 061**
**US-A1- 2019 154 045**

**Beschreibung**

Die Erfindung betrifft ein System und ein Verfahren zur optimierten Regelung einer Anordnung von mehreren Ventilatoren (Fan-Array).

In Gebäuden, Anlagen und in Reinraumlaboren kommen regelmäßig Anordnen von Ventilatoren zum Einsatz

Im Stand der Technik gibt es bisher nur unzureichende Systeme und Regelungsverfahren, um solche Ventilatoren-Anordnungen zu regeln und in einem optimalen Gesamtwirkungsgrad für eine bestimmte Lüftungsaufgabe zu betreiben.

Dabei handelt es sich insbesondere um einen gemeinsamen Betrieb verschiedenartiger Ventilatoren d.h. verschiedenen Kenngrößen, Typs und/oder anderer Ventilatoreneigenschaften, die Einfluss auf die Lüftungsaufgabe haben.

So ist aus der EP 1604116 B1 eine Lüfteranordnung bekannt in einem Luftbehandlungssystem mit mindestens drei Lüftereinheiten, wobei die mindestens drei Lüftereinheiten in der Lüfteranordnung angeordnet sind und ein Steuerungssystem vorgesehen ist, das in der Lage ist, die Lüftereinheiten mit einem im Wesentlichen maximalen Wirkungsgrad zu betätigen, indem ausgewählte Lüftereinheiten strategisch ein- und ausgeschaltet werden. Allerdings beschreibt diese Anmeldung lediglich das zu erzielende Ergebnis, nicht aber die technischen Mittel, wie ein solches Wirkungsgradoptimum erzielt werden kann.

Weiterer druckschriftlicher Stand der Technik im vorliegenden technischen Gebiet, welcher den Oberbegriff des Anspruchs 1 widerspiegelt, ist in den Dokumenten US 2011/014 061 A1, US 2019/154 045 A1 und EP 3 795 465 A1 offenbart.

Der Erfindung liegt daher die Aufgabe zugrunde, im Stand der Technik bekannten Nachteile zu überwinden und ein optimiertes und verbessertes System und Verfahren zur Steuerung einer Lüfteranordnung bereit zu stellen.

Diese Aufgabe wird durch die Merkmalskombination gemäß Patentanspruch 1 gelöst.

Erfindungsgemäß wird hierzu ein Luftbehandlungssystem mit einer Ventilatorenanordnung bestehend aus $k_{max}$ Ventilatoren vorgeschlagen, die in ihrer jeweiligen Drehzahl $n_i$ regelbar sind und einem Steuerungs-und Regelungssystem, das dazu ausgebildet ist, die Drehzahlen $n_i$ mit $i \in [1, 2\ 3, 4\ , 5, ..., k]$ von k der $k_{max}$ Ventilatoren zu regeln, wobei sich abhängig von den jeweils eingestellten Drehzahlen $n_i$ ein bestimmter Betriebspunkt des Luftbehandlungssystems mit einer dafür spezifischen Gesamtleistung $P_{Ges}$ des Luftbehandlungssystems einstellen lässt, wobei das Steuerungs-und Regelungssystem ferner Mittel aufweist, um diejenige(n) Drehzahlkombination(en) der Drehzahlen $n_i$ der k Ventilatoren zu ermitteln, bei der oder den die Gesamtleistung $P_{Ges}$ des Luftbehandlungssystems gegenüber anderen Drehzahlkombinationen der Drehzahlen $n_i$ reduziert oder minimal ist.

In einer vorteilhaften Variante sind die $k_{max}$ Ventilatoren parallel geschaltet.

In einem Ausführungsbeispiel der Erfindung ist weiter vorgesehen, dass die $k_{max}$ Ventilatoren Ventilatoren mit unterschiedlicher Leistung, Typ und/oder Baugröße sind, welche in einer bestimmten Rasteranordnung zueinander in Zeilen und/oder Spalten und/oder einer Matrix angeordnet sind. Bei einer beispielhaften Zeilen/Spaltenanordnung wird auch von Fan-Array im Sinne der vorliegenden Erfindung gesprochen. Allerdings spielt die genaue Anordnung der Ventilatoren keine Rolle, insbesondere, da auch Ventilatoren unterschiedlicher Bauform und Größe zu einer Anordnung kombiniert werden können.

Erfindungsgemäß umfassen die Mittel zum Regeln der leistungsoptimierten Drehzahlen $n_i$ der $k_{max}$ Ventilatoren ein Kennfeld, welches die Betriebspunkte des Luftbehandlungssystems aufweist und ferner ein Auswahlmittel umfassen, welches diejenigen Drehzahlen $n_i$ zu den Betriebspunkten im Kennfeld auswählt, um den Betrieb im betreffenden Betriebspunkt zu realisieren.

Vorzugsweise wird der Betriebspunkt des Luftbehandlungssystems definiert durch die von den k Ventilatoren zu erzielende Druckerhöhung $\Delta p$ und den zu erzielenden Gesamtvolumenstrom $Q_{Ges}$.

Zur Optimierung des Systems sind die dazu geeigneten Drehzahlen der einzelnen Ventilatoren $n_1, n_2,..., n_k$ der k aus $k_{max}$ Ventilatoren erforderlich, für die die Gesamtleistung der Ventilatorenanordnung bzw. des Arrays bei vorgegebenem Betriebspunkt minimal ist. Minimal im Sinne der vorliegenden Erfindung ist der Bereich der Gesamtleistung mit einem relativen lokalen Minimum.

Sofern es sich erfindungsgemäß um eine Parallelschaltung von Ventilatoren handelt, ergibt sich der Gesamtvolumenstrom aus der Summe der Einzelvolumenströme der k Ventilatoren und die Gesamtleistung aus der Summe der Einzelleistungen, wie folgt:

$$P_{Ges} = \sum_{i=1}^{k} P_i\ (n_i)$$

und

$$Q_{Ges} = \sum_{i=1}^{k} Q_i(n_i) \;\; mit \;\; Q_i = \frac{\varphi_i \cdot \pi^2 \cdot D_i^3 \cdot n_i}{4}$$

Bei dem erfindungsgemäßen Problem handelt es sich in einer Teilaufgabe demnach um ein Optimierungsproblem (Optimalitätsbedingung = Minimierung der Gesamtleistung der Ventilatoranordnung) mit der Nebenbedingung eines definierten Gesamtvolumenstroms.

Die in dieser Beschreibung verwendeten Parameter sind wie folgt definiert:

| | |
|---|---|
| $k_{max}$ | Gesamtzahl der Ventilatoren |
| $k$ | Anzahl der aktiven Ventilatoren |
| $\psi_i$ | Druckzahl des Ventilators i mit i = 1,...,k |
| $\phi_i$ | Flow Coefficient des Ventilators i mit i=1,...,k |
| $\eta$ | Wirkungsgrad |
| $\Delta pmin$ | Minimale Druckerhöhung |
| $\Delta pmax$ | Maximale Druckerhöhung |
| $Qmin$ | Minimaler Volumenstrom |
| $Qmax$ | Maximaler Volumenstrom |
| $dp$ | Vorgegebene Druckänderung |
| $dQ$ | Vorgebene Volumenstromänderung |
| $n_i$ | Drehzahl des Ventilators i mit i = 1,..,k |
| $n_{i,max}$ | Maxmimale Drehzahl des Ventilators i |
| $P_i$ | Ventilatorleistung des Ventilators i |
| $P_{opt}$ | optimale Ventilatorleistung |
| $P_{max}$ | Maximale Ventilatorleistung |
| $D_i$ | Durchmesser des des Ventilators i |

Die dimensionslose Leistung P* ist für den jeweiligen Ventilator gegeben durch:

$$P_i^* = \frac{\psi_i \cdot \varphi_i}{\eta_i}$$

Wobei für die Leistung des Ventilators i folgender Zusammenhang gilt:

$$P_i = P_i^* \cdot \frac{\pi^4 \cdot D_i^5 \cdot n_i^3 \cdot \rho}{8}$$

Rechnerisch werden die Leistung und der Volumenstrom so umgeformt, dass sie reine Funktionen der Drehzahl werden. Hierfür werden die dimensionslosen Druck- und Wirkungsgradkennlinien der verwendeten Ventilatoren benötigt. Die jeweilige dimensionslose Druckkennlinie wird mit einem Polynom 2ter Ordnung angenähert. Bevorzugt ist hier die Annähung mit einem quadratischen Ansatz, da die Näherungsfunktion im betrachteten Bereich φ>0 dann streng monoton ist:

$$\psi_i(\varphi_i) = a_{\psi,i} \cdot \varphi_i^2 + c_{\psi,i}$$

Mit dieser mathematischen Beschreibung der Druckzahl kann die Durchflusszahl in Abhängigkeit der konstanten Koeffizienten der Polynomnäherung, des Durchmessers, der Dichte, der Drehzahl und der Druckerhöhung ausgedrückt werden.

Im Ergebnis ist bei vorgegebenem Betriebspunkt dann die Drehzahl die einzige von der Regelung beeinflussbare Variable.

$$\varphi_i(n_i) = -\frac{b_{\psi,i}}{2a_{\psi,i}} + \sqrt{\left(\frac{b_{\psi,i}}{2a_{\psi,i}}\right)^2 - \frac{c_{\psi,i}}{a_{\psi,i}} + \frac{2\Delta p}{\rho \cdot \pi^2 \cdot D_i^2 \cdot n_i^2 \cdot a_{\psi,i}}}$$

Für die Partialableitung der Durchflusszahl nach der Drehzahl ergibt sich dann die folgende Gleichung:

$$\frac{\partial \varphi_i}{\partial n_i} = -\frac{\dfrac{2\Delta p}{\rho \cdot \pi^2 \cdot D_i^2 \cdot n_i^3 \cdot a_{\psi,i}}}{\sqrt{\left(\dfrac{b_{\psi,i}}{2a_{\psi,i}}\right)^2 - \dfrac{c_{\psi,i}}{a_{\psi,i}} + \dfrac{2\Delta p}{\rho \cdot \pi^2 \cdot D_i^2 \cdot n_i^2 \cdot a_{\psi,i}}}}$$

Betrachtet man nun den Wirkungsgrad des Systems kann man diesen ebenfalls annähern durch eine Polynomgleichung vierter Ordnung, nämlich wie folgt:

$$\eta_i(\varphi_i) = a_{\eta,i} \cdot \varphi_i^4 + b_{\eta,i} \cdot \varphi_i^3 + c_{\eta,i} \cdot \varphi_i^2 + d_{\eta,i} \cdot \varphi_i + e_{\eta,i}$$

Dabei stehen a, b, c und d für die Koeffizienten in der jeweiligen Ordnung dieser Polynomgleichung. Diese besitzt abhängig von der Durchflusszahl demnach ein Maximum. Für die Partialableitung des Wirkungsgrades nach der Drehzahl ergibt sich dann die folgende Differentialgleichung:

$$\frac{\partial \eta_i}{\partial n_i} = \left(4a_{\eta,i} \cdot \varphi_i^3 + 3b_{\eta,i} \cdot \varphi_i^2 + 2c_{\eta,i} \cdot \varphi_i + d_{\eta,i}\right) \cdot \frac{\partial \varphi_i}{\partial n_i}$$

Ziel ist es ja die Leistung zu optimieren. Mit Hilfe der Partialableitung der Durchflusszahl und der Partialableitung des Wirkungsgrades nach der Drehzahl kann die Partialableitung der dimensionslosen Leistung P* bestimmt werden, bevorzugt mit dem Wert für den Koeffizienten b = 0.

$$\frac{\partial P_i^*}{\partial n_i} = \frac{\partial \left( a_{\psi,i} \cdot \varphi_i^3 + b_{\psi,i} \cdot \varphi_i^2 + c_{\psi,i} \cdot \varphi_i \right)}{\partial \eta_i(\varphi_i)}$$

$$= 3 \cdot a_{\psi,i} \varphi_i^2 \cdot \eta_i^{-1} \cdot \frac{\partial \varphi_i}{\partial n_i} - a_{\psi,i} \varphi_i^3 \cdot \eta_i^{-2} \cdot \frac{\partial \eta_i}{\partial n_i}$$

$$+ 2 \cdot b_{\psi,i} \varphi_i \cdot \eta_i^{-1} \cdot \frac{\partial \varphi_i}{\partial n_i} - b_{\psi,i} \varphi_i^2 \cdot \eta_i^{-2} \cdot \frac{\partial \eta_i}{\partial n_i}$$

$$+ c_{\psi,i} \cdot \eta_i^{-1} \cdot \frac{\partial \varphi_i}{\partial n_i} - c_{\psi,i} \varphi_i \cdot \eta_i^{-2} \cdot \frac{\partial \eta_i}{\partial n_i}$$

Im Ergebnis lässt sich dadurch die Partialableitung der Leistung P und die des Volumenstroms Q wie folgt bestimmen:

$$\frac{\partial P_i}{\partial n_i} = \frac{\pi^4 \cdot D_i^5 \cdot \rho}{8} \left( 3n_i^2 \cdot P_i^* + n_i^3 \cdot \frac{\partial P_i^*}{\partial n_i} \right)$$

$$\frac{\partial Q_i}{\partial n_i} = \frac{\pi^2 \cdot D_i^3}{4} \cdot \left( \varphi_i + n_i \cdot \frac{\partial \varphi_i}{\partial n_i} \right)$$

Die vorstehend hergeleiteten Zusammenhänge werden nun weiter wie folgt verwendet. Die Lösung des Optimierungsproblems führt auf ein Gleichungssystem mit k+1 Unbekannten (bei k Drehzahlen sowie einem Lagrange-Multiplikator $\lambda$).

$$\frac{\partial P_1}{\partial n_1} = \lambda \cdot \frac{\partial Q_1}{\partial n_1}$$

$$\vdots$$

$$\frac{\partial P_k}{\partial n_k} = \lambda \cdot \frac{\partial Q_k}{\partial n_k}$$

$$Q_{Ges} = \sum_{i=1}^{k} Q_i(n_i)$$

Wie bereits weiter zuvor erläutert minimiert die Lösung des Gleichungssystems (Drehzahlen $n_i$ der Lüfter) die benötigte Leistung der Ventilatorenanordnung bei vorgegebenem Betriepspunkt $\Delta p$ und $Q_{Ges}$.

Durch Variation der Betriebspunktvorgabe und erneuter Lösung des Gleichungssystems erhält man für jeden Betriebspunkt in einem Ventilatorkennfeld mit $\Delta p_{min} \leq \Delta p \leq \Delta p_{max}$ und $Q_{min} \leq Q \leq Q_{max}$ die optimale Drehzahlkombination der k Ventilatoren und die optimale Kombination der k verschiedenartigen Ventilatortypen selbst. Rein praktisch kann die Variation durch Variation der Drehzahlen $n_i$ unter Berücksichtigung der Drehzahl jeden Ventilators erfolgen. Letztendlich stellen die oben erläuterten Partialableitungen diejenigen Kurven dar, welche die betrachtete Funktionsgrößenänderung in Abhängigkeit der Drehzahl darstellen.

Erfindungsgemäß ist damit vorgesehen, dass eine Zuordnungsmatrix im System hinterlegt ist, welche die Betriebspunkte im Kennfeld mit den hierzu ermittelten optimierten Drehzahlen $n_i$ verknüpft, vorzugsweise durch eine bijektive eindeutige Abbildungsfunktion.

Wie oben allgemein erläutert, ist es erfindungsgemäß vorgesehen, dass die Ermittlung der für einen Betriebspunkt ermittelten Drehzahlen aus der Lösung von Differentialgleichungen für entweder die Leistungen $P_i$ und/oder den Volumenstrom $Q_i$ und deren Partialableitungen erfolgt, wobei diese als variable Parameter die Drehzahlen $n_i$ aufweisen.

Ein weiterer Aspekt der vorliegenden Erfindung betrifft ein Verfahren zum Einstellen eines Betriebspunktes eines Luftbehandlungssystems nach einem der vorhergehenden Ansprüche, mit den folgenden Schritten:

a. Bestimmen der Anzahl k der Ventilatoren aus den $k_{max}$ Ventilatoren;

b. Lösen der nachfolgenden Differentialgleichungen zur Bestimmung der Drehzahlen $n_i$:

$$\frac{\partial P_1}{\partial n_1} = \lambda \cdot \frac{\partial Q_1}{\partial n_1}$$
$$\vdots$$
$$\frac{\partial P_k}{\partial n_k} = \lambda \cdot \frac{\partial Q_k}{\partial n_k}$$

unter Berücksichtigung einer erforderlichen minimalen Gesamtleistung mit

$$Q_{Ges} = \sum_{i=1}^{k} Q_i(n_i)$$

wobei $Q_i$ den Volumenstrombeitrag des Ventilators i der k Ventilatoren zum Gesamtvolumenstrom $Q_{Ges}$ bezeichnet.

Das Verfahren kann insbesondere auch mit den folgenden Schritten erfolgen:

c. Auswählen eines Betriebspunktes;
d. Auswählen der Drehzahlen $n_i$ der Ventilatoren aus einem Kennfeld;
e. Regeln der Drehzahlen $n_i$ der k Ventilatoren.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1       eine schematische Darstellung einer Ventilatorenanordnung mit $k_{max} = 4$, somit aus 4 Ventilatoren,

Fig. 2       ein beispielhaftes Kennfeld in Bezug auf die Größe der Ventilatorenanordnung mit beispielhaft k= 4 gleichen Ventilatoren und

Fig. 3a, 3b    ein Ablaufdiagramm zum Betreiben einer Ventilatorenanordnung aufgeteilt auf die Figuren 3a und 3b.

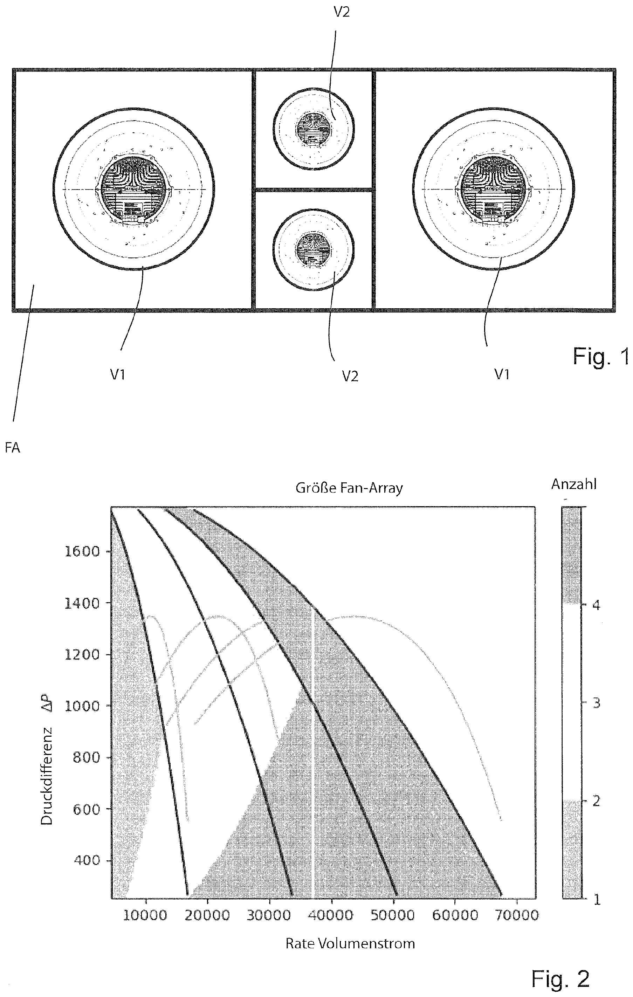

Im Folgenden wird die Erfindung mit Bezug auf die Figuren 1 bis 3 näher erläutert. In der Figur 1 findet man eine Ventilatorenanordnung in Parallelschaltung mit $k_{max} = 4$ Ventilatoren V. Diese stellt ein Fan-Array FA aus jeweils 2 unterschiedlichen Ventilatortypen V1, V2 unterschiedlicher Leistung und Baugröße dar.

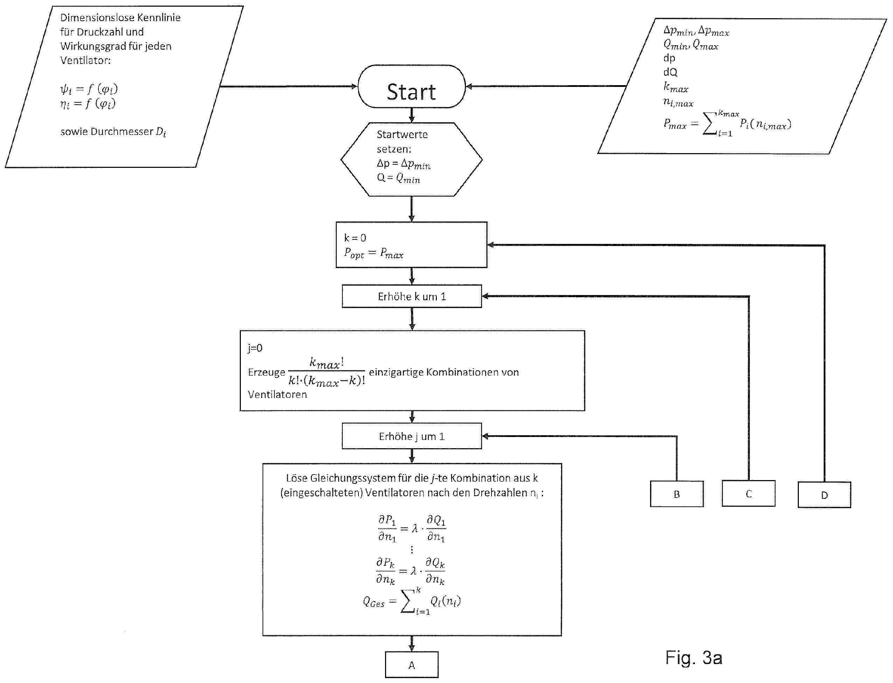

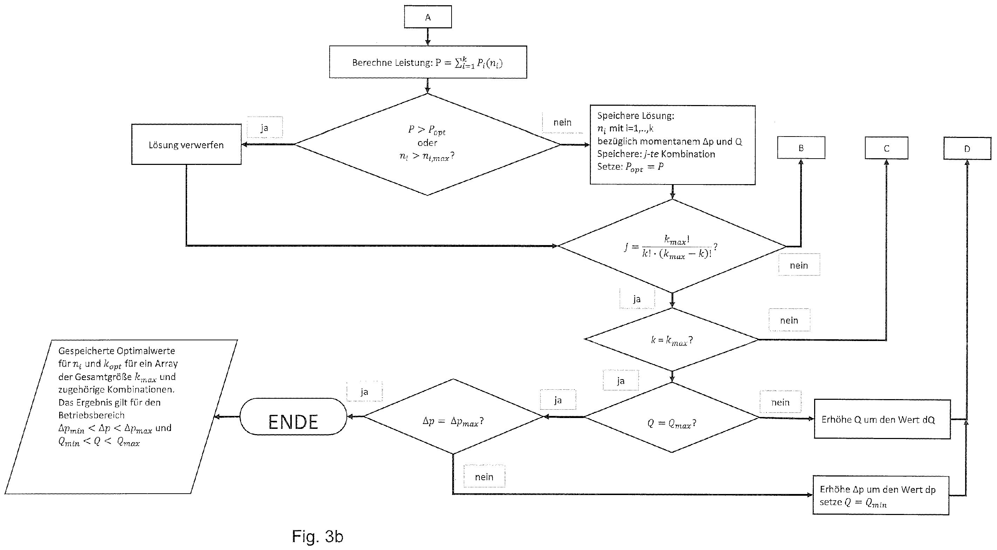

Weiter vorteilhaft ist es, gemäß einer nicht zur beanspruchten Erfindung gehörenden Ausführungsform, wenn alternativ bei Kenntnis der optimalen Drehzahlen die Anzahl und/oder Kombination derjenigen Ventilatoren aus den k Ventilatoren ermittelt wird, um den Betrieb in einem optimierten Betriebspunkt zu realsieren. So kann zum Beispiel entsprechend der Fig. 1, wenn in beiden Fällen jeweils die optimalen Drehzahlen bekannt sind, die beiden großen Ventilatoren V1 eingeschaltet werden, während die kleineren Ventilatoren V2 ausgeschaltet bleiben oder aber das Verfahren die Lösung ermitteln, dass es vorteilhafter ist die beiden kleinen Ventilatoren V2 zusammen mit einem der Ventilatoren V1 zu aktivieren, während der zweite größere Ventilator V2 ausgeschaltet bleibt. Die Figur 2 zeigt ein beispielhaftes Kennfeld in Bezug auf die Größe der Ventilatorenanordnung. In dem beispielhaften Kennfeld ist zu jedem Betriebspunkt die optimale Anzahl der aktiven Ventilatoren dargestellt. Somit ist nach dem Programmablauf (gemäß der Figur 3) in jedem Betriebspunkt die optimale Ventilatorkonfiguration mit den entsprechenden optimalen Drehzahlen dieser Ventilatoren verfügbar.

Die Figuren 3a und 3b sind zusammenhängend zu betrachten und zeigen ein Ablaufdiagramm zur Erläuterung des Steuerungs- und Regelungskonzeptes der Erfindung.

**Patentansprüche**

1. Luftbehandlungssystem mit einer Ventilatorenanordnung bestehend aus $k_{max}$ Ventilatoren, die in ihrer jeweiligen Drehzahl $n_i$ regelbar sind und mit einem Steuerungs- und Regelungssystem, das dazu ausgebildet ist, die Drehzahlen $n_i$ mit $i \in [1, 2, 3, 4, 5, ..., k]$ von k der $k_{max}$ Ventilatoren zu regeln, wobei sich abhängig von den jeweils eingestellten Drehzahlen $n_i$ ein bestimmter Betriebspunkt des Luftbehandlungssystems mit einer dafür spezifischen Gesamtleistung $P_{Ges}$ des Luftbehandlungssystems einstellen lässt, wobei das Steuerungs-und Regelungssystem ferner Mittel aufweist, um diejenige(n) Drehzahl-kombination(en) der Drehzahlen $n_i$ der k aus $k_{max}$ Ventilatoren zu ermitteln, bei der oder denen die Gesamtleistung $P_{Ges}$ des Luftbehandlungssystems gegenüber anderen Drehzahlkombina-tionen der Drehzahlen $n_i$ reduziert oder minimal ist, wobei die Mittel zum Regeln der leistungsoptimierten Drehzahlen $n_i$ der $k_{max}$ Ventilatoren ein Kennfeld umfassen, welches die Betriebspunkte des Luftbehandlungssystems aufweist und ferner ein Auswahlmittel umfassen, welches diejenigen Drehzahlen $n_i$ zu den Betriebspunkten im Kennfeld auswählt, um den Betrieb im betreffenden Betriebspunkt zu realisieren, **dadurch gekennzeichnet, dass** als Mittel ferner eine Zuordnungsmatrix im System hinterlegt ist, welche die Betriebspunkte im Kennfeld mit den hierzu ermittelten optimalen Kombinationen der Ventilatortypen und deren jeweiligen optimalen Drehzahlen $n_i$ verknüpft, vorzugsweise durch eine bijektive eindeutige Abbildungsfunktion, und dass die Ermittlung der für einen Betriebspunkt ermittelten Drehzahlen $n_i$ aus der Lösung der Differentialgleichungen für entweder die Leistungen $P_i$ und/oder den Volumenstrom $Q_i$ und deren Partialableitungen erfolgt, wobei diese als variable Parameter die Drehzahlen $n_i$ aufweisen.

2. Luftbehandlungssystem nach Anspruch 1, **dadurch gekennzeichnet, dass** die $k_{max}$ Ventilatoren parallel geschaltet sind.

3. Luftbehandlungssystem nach Anspruch 1 oder 2, **dadurch gekennzeichnet, dass** die $k_{max}$ Ventilatoren Ventilatoren mit unterschiedlicher Leistung, Typ und/oder Baugröße sind, welche vorzugsweise in einer bestimmten Anordnung zueinander in Zeilen und/oder Spalten und/oder einer Matrix oder einer anderen Anordnung zueinander angeordnet sind.

4. Luftbehandlungssystem nach einem der vorhergehenden Ansprüche, **dadurch gekennzeichnet, dass** der Betriebspunkt des Luftbehandlungssystems definiert ist durch die von den k Ventilatoren zu erzielende Druckerhöhung $\Delta p$ und den zu Gesamtvolumenstrom $Q_{Ges}$.

5. Verfahren zum Einstellen eines Betriebspunktes eines Luftbehandlungssystems nach einem der vorhergehenden Ansprüche, mit den folgenden Schritten:

   a. Bestimmen der Anzahl k der Ventilatoren aus den $k_{max}$ Ventilatoren mittels eines Steuerungs- und Regelungssystems;
   b. Lösen der nachfolgenden Differentialgleichungen zur Bestimmung der Drehzahlen $n_i$ mittels des Steuerungs- und Regelungssystems:

$$\frac{\partial P_1}{\partial n_1} = \lambda \cdot \frac{\partial Q_1}{\partial n_1}$$

$$\frac{\partial P_k}{\partial n_k} = \lambda \cdot \frac{\partial Q_k}{\partial n_k}$$

unter Berücksichtigung einer erforderlichen minimalen Gesamtleistung mit

$$Q_{Ges} = \sum_{i=1}^{k} Q_i(n_i)$$

wobei $Q_i$ den Volumenstrombeitrag des Ventilators i der k Ventilatoren zum Gesamtvolumenstrom $Q_{Ges}$ bezeichnet.

**6.** Verfahren nach Anspruch 5, mit den folgenden Schritten:

a. Auswählen eines Betriebspunktes mittels des Steuerungs- und Regelungssystems;
b. Auswählen der Drehzahlen $n_i$ der Ventilatoren aus einem Kennfeld mittels des Steuerungs- und Regelungssystems;
c. Regeln der Drehzahlen $n_i$ der k Ventilatoren mittels des Steuerungs- und Regelungssystems.

**Claims**

**1.** An air treatment system with a fan arrangement consisting of $k_{max}$ fans, the respective speed $n_i$ of which fans is regulatable, and with a control and regulation system that is designed to regulate the speeds $n_i$, where i ∈ [1, 2, 3, 4, 5,..., k] of k of the $k_{max}$ fans, it being possible to set a certain operating point of the air treatment system with a specific overall power $P_{total}$ of the air treatment system as a function of the respective set speeds $n_i$, the control and regulation system also having means for determining the speed combination(s) of the speeds $n_i$ of the k of $k_{max}$ fans at which the total power $P_{total}$ of the air treatment system is reduced or minimal compared to other speed combinations of the speeds $n_i$, wherein the means for regulating the performance-optimized speeds $n_i$ of the $k_{max}$ fans comprise a characteristic map which has the operating points of the air treatment system and further comprises a selection means which shows those speeds $n_i$ at the operating points selected in the map in order to implement the operation at the relevant operating point, **characterized in that** an allocation matrix is also stored in the system as a means which links the operating points in the characteristic map with the optimal combinations of fan types identified for this purpose and their respective optimal speeds $n_i$, preferably using an objective, unambiguous mapping function, and **in that** the speeds $n_i$ identified for an operating point are determined from the solution of the differential equations for either the powers $P_i$ and/or the volume flow $Q_i$ and partial derivatives thereof, these having the speeds $n_i$ as variable parameters.

**2.** The air treatment system as set forth in claim 1, **characterized in that** the $k_{max}$ fans are connected in parallel.

**3.** The air treatment system as set forth in one of claims 1 or 2, **characterized in that** the $k_{max}$ fans are fans of different power, type, and/or size which are preferably arranged in a certain arrangement relative to one another in rows and/or columns and/or a matrix or in another arrangement relative to one another.

**4.** The air treatment system as set forth in one of the preceding claims, **characterized in that** operating point of the air treatment system is preferably defined by the pressure increase $\Delta p$ and the total volume flow $Q_{total}$ to be achieved by the k fans.

**5.** A method for setting an operating point of an air treatment system as set forth in one of the preceding claims, comprising the following steps:

a. Determining the number k of fans from among the $k_{max}$ fans by means of a control and regulation system;
b. Solving the following differential equations in order to determine the speeds $n_i$ by means of the control and regulation system:

$$\frac{\partial P_1}{\partial n_1} = \lambda \cdot \frac{\partial Q_1}{\partial n_1}$$

$$\vdots$$

$$\frac{\partial P_k}{\partial n_k} = \lambda \cdot \frac{\partial Q_k}{\partial n_k}$$

in consideration of a required minimum overall level of performance,

$$Q_{\text{total}} = \sum_{i=1}^{k} Q_i(n_i)$$

where $Q_i$ denotes the volume flow contribution of the fan i of the k fans to the total volume flow $Q_{\text{total}}$.

6. The method as set forth in claim 5, comprising the following steps:

a. Selecting an operating point by means of the control and regulation system;
b. Selecting the speeds $n_i$ of the fans from a characteristic map by means of the control and regulation system;
c. Regulating the speeds $n_i$ of the k fans by means of the control and regulation system.

## Revendications

1. Système de traitement d'air comprenant un ensemble de ventilateurs composé de $k_{max}$ ventilateurs dont la vitesse de rotation $n_i$ est réglable, et un système de commande et de régulation conçu pour réguler les vitesses de rotation $n_i$ avec $i \in [1, 2, 3, 4, 5, ..., k]$ de k des $k_{max}$ ventilateurs, un point de fonctionnement déterminé du système de traitement d'air avec une puissance totale PGes spécifique du système de traitement d'air pouvant être réglé en fonction des vitesses de rotation $n_i$ réglées respectivement, le système de commande et de régulation comportant en outre des moyens pour déterminer la ou les combinaisons de vitesses de rotation des vitesses de rotation $n_i$ des k parmi $k_{max}$ ventilateurs pour laquelle ou pour lesquelles la puissance totale $P_{Ges}$ du système de traitement d'air est réduite ou minimale par rapport à d'autres combinaisons de vitesses de rotation des vitesses de rotation $n_i$, dans lequel les moyens de régulation des vitesses optimisées en termes de puissance $n_i$ des $k_{max}$ ventilateurs comprennent un champ caractéristique qui présente les points de fonctionnement du système de traitement d'air et comprennent en outre un moyen de sélection qui sélectionne les vitesses $n_i$ correspondant aux points de fonctionnement dans le champ caractéristique afin de réaliser le fonctionnement au point de fonctionnement concerné, **caractérisé en ce que** le système comprend en outre une matrice d'affectation qui relie les points de fonctionnement dans le champ caractéristique aux combinaisons optimales déterminées à cet effet des types de ventilateurs et à leurs vitesses de rotation $n_i$ optimales respectives, de préférence par une fonction de représentation bijective et univoque, et **en ce que** la détermination des vitesses de rotation $n_i$ déterminées pour un point de fonctionnement s'effectue à partir de la solution des équations différentielles pour soit les puissances $P_i$ et/ou le débit volumique $Q_i$, soit leurs dérivées partielles, celles-ci présentant les vitesses de rotation $n_i$ comme paramètres variables.

2. Système de traitement d'air selon la revendication 1, **caractérisé en ce que** les $k_{max}$ ventilateurs sont connectés en parallèle.

3. Système de traitement d'air selon la revendication 1 ou 2, **caractérisé en ce que** les $k_{max}$ ventilateurs sont des ventilateurs de puissance, de type et/ou de taille différents, de préférence disposés selon une configuration spécifique les uns par rapport aux autres, en rangées et/ou en colonnes et/ou en matrice ou selon toute autre disposition.

4. Système de traitement d'air selon l'une quelconque des revendications précédentes, **caractérisé en ce que** le point de fonctionnement du système de traitement d'air est défini par l'augmentation de pression $\Delta p$ à atteindre par les k ventilateurs et le débit volumique total $O_{Ges}$.

5. Procédé de réglage d'un point de fonctionnement d'un système de traitement d'air selon l'une quelconque des revendications précédentes, comprenant les étapes suivantes :

a. la détermination du nombre k de ventilateurs à utiliser parmi les $k_{max}$ ventilateurs, en utilisant un système de commande ;
b. la résolution des équations différentielles suivantes pour déterminer les vitesses de rotation $n_i$ à l'aide du système de commande :

$$\frac{\partial P_1}{\partial n_1} = \lambda \cdot \frac{\partial Q_1}{\partial n_1}$$

$$\frac{\partial P_k}{\partial n_k} = \lambda \cdot \frac{\partial Q_k}{\partial n_k}$$

en tenant compte d'une performance globale minimale requise avec

$$Q_{Ges} = \sum_{i=1}^{N} Q_i(n_i)$$

où $Q_i$ désigne la contribution du débit volumique du ventilateur dans les k ventilateurs au débit volumique total $O_{Ges}$.

6. Procédé selon la revendication 5, comprenant les étapes suivantes :

a. la sélection d'un point de fonctionnement à l'aide du système de commande ;
b. la sélection des vitesses des ventilateurs à partir d'une courbe caractéristique à l'aide du système de commande ;
c. la commande des vitesses des ventilateurs à l'aide du système de commande.

V2

Fig. 1

V1                    V2                    V1

FA

Fig. 2

Fig. 3a

Dimensionslose Kennlinie für Druckzahl und Wirkungsgrad für jeden Ventilator:

$$\psi_i = f\,(\varphi_i)$$
$$\eta_i = f\,(\varphi_i)$$

sowie Durchmesser $D_i$

$\Delta p_{min}, \Delta p_{max}$
$Q_{min}, Q_{max}$
dp
dQ
$k_{max}$
$n_{i,max}$
$$P_{max} = \sum_{i=1}^{k_{max}} P_i(n_{i,max})$$

Start

Startwerte setzen:
$\Delta p = \Delta p_{min}$
$Q = Q_{min}$

$k = 0$
$P_{opt} = P_{max}$

Erhöhe k um 1

$j=0$

Erzeuge $\dfrac{k_{max}!}{k! \cdot (k_{max}-k)!}$ einzigartige Kombinationen von Ventilatoren

Erhöhe j um 1

Löse Gleichungssystem für die $j$-te Kombination aus k (eingeschalteten) Ventilatoren nach den Drehzahlen $n_i$ :

$$\frac{\partial P_1}{\partial n_1} = \lambda \cdot \frac{\partial Q_1}{\partial n_1}$$
$$\vdots$$
$$\frac{\partial P_k}{\partial n_k} = \lambda \cdot \frac{\partial Q_k}{\partial n_k}$$
$$Q_{Ges} = \sum_{i=1}^{k} Q_i(n_i)$$

A

B

C

D

EP 3 940 244 B1

A

Berechne Leistung: $P = \sum_{i=1}^{k} P_i(n_i)$

$P > P_{opt}$ oder $n_i > n_{i,max}$?

ja → Lösung verwerfen

nein → Speichere Lösung:
$n_i$ mit i=1,..,k
bezüglich momentanem Δp und Q
Speichere: $j$-te Kombination
Setze: $P_{opt} = P$

B

C

D

$j = \dfrac{k_{max}!}{k! \cdot (k_{max} - k)!}$?

nein

ja

$k = k_{max}$?

nein

ja

$Q = Q_{max}$?

nein → Erhöhe Q um den Wert dQ

ja

$\Delta p = \Delta p_{max}$?

ja → ENDE → Gespeicherte Optimalwerte für $n_i$ und $k_{opt}$ für ein Array der Gesamtgröße $k_{max}$ und zugehörige Kombinationen. Das Ergebnis gilt für den Betriebsbereich $\Delta p_{min} < \Delta p < \Delta p_{max}$ und $Q_{min} < Q < Q_{max}$

nein → Erhöhe Δp um den Wert dp setze $Q = Q_{min}$

Fig. 3b

**IN DER BESCHREIBUNG AUFGEFÜHRTE DOKUMENTE**

**In der Beschreibung aufgeführte Patentdokumente**

- EP 1604116 B1
- US 2011014061 A1
- US 2019154045 A1
- EP 3795465 A1